# EUROPEAN PATENT APPLICATION

(11) **EP 0 631 837 A1**
(43) Date of publication of application: **04.01.1995**
(21) Application number: 94304812.4
(22) Date of filing: 30.06.1994
(51) Int. Cl.: B23H 9/04, B23H 1/04

(54) **Embossing roll manufacture**

(30) Priority: 01.07.1993 GB 9313601
(71) Applicant: ZED INSTRUMENTS LIMITED, Hersham Surrey, KT12 3PD (GB)
(72) Inventor: Zollman, Peter Martin, Walton on Thames Surrey KT12 5DW (GB)
(74) Representative: Rackham, Stephen Neil

(57) **Abstract**

A method of engraving a pattern in a metal roll (4) comprises the steps of:
forming a surface on an electrode (2), the surface corresponding to a negative image of the pattern to be engraved;
supporting the metal roll (4) and the surface of the electrode (2) in a dielectric bath (1);
moving the metal roll (4) and the surface of the electrode (2) into close proximity; and,
applying a voltage between the electrode (2) and the metal roll (4) whilst rotating the metal roll (4) about its axis and driving one of the metal roll (4) or electrode (2) along at least one other axis to engrave the image on the metal roll by electric discharge machining. Preferably the electrode (2) is formed by first engraving an image of the pattern in a laser engravable material using a CO₂ laser to form a master engraving and the electrode (2) is formed from this by an electroplating process.

## Description

At present, simple embossing rolls are manufactured using CNC milling machines. More complex patterns may be obtained using what is termed the lost wax etch process in which a plastics master roll is engraved using a laser. A metal roll is coated with a layer of wax and the plastics master is rolled around the surface of the metal roll thus displacing some of the wax. Concentrated acid is subsequently used to etch the surface of the metal roll where the wax has been displaced. The metal roll is then re-coated with wax and the process is repeated until the pattern is etched to the correct depth.

The manufacture of steel embossing rolls by direct application of a CO₂ laser engraver would be an attractive proposition but at present this is not possible since CO₂ lasers have insufficient power to enable hardened steel rolls to be produced directly by this method. At present, only hard polymer rolls can be engraved directly by CO₂ laser. Conventionally, a laser is used to expose a desired pattern on a photo-resist which is coated onto the hardened steel roll and then the photo-resist is developed and washed out to expose selected areas of the roll for subsequent treatment with concentrated acid. This process, like the last wax etch process, suffers from the inherent safety and environmental problems associated with concentrated acids.

According to a first aspect the present invention, a method of engraving a pattern in a metal roll comprises the steps of:
forming a surface on an electrode, the surface corresponding to a negative image of the pattern to be engraved;
supporting the metal roll and the electrode in a dielectric bath;
moving the metal roll and the surface of the electrode into close proximity; and,
applying a voltage between the electrode and the metal roll whilst rotating the metal roll about an axis and driving one of the metal roll or electrode along at least one other axis without slip occurring between the surface of the electrode and the metal roll, to engrave the metal roll by electric discharge machining.

Preferably the dielectric bath is filled with a liquid dielectric such as oil.

The electrode may be formed as a cylindrical roll or an arc, but preferably it is formed as a flat plate. Preferably the flat plate is manufactured from high conductivity, oxide-free copper.

The electrode plate may be formed by first engraving the negative image of the pattern in a curved rubber sheet or some other suitable material using a CO₂ laser to form a master engraving. An epoxy resin cast of the master engraving may then be produced by pouring epoxy resin onto the surface of the flattened rubber sheet and allowing the resin to set. Once set, the epoxy resin cast can be peeled off and coated with a sensitising material. A layer of silver sprayed to a depth of, for example, 0.1 µm is a suitable sensitising material. Finally, the metal electrode plate with a surface corresponding to the negative image of the pattern to be engraved can be formed by electroplating copper onto the epoxy resin cast to a required depth and subsequently removing the epoxy resin cast.

Preferably, the metal electrode is produced by electroplating directly onto the engraved rubber sheet which is pre-treated with a sensitising material. In this case, the rubber sheet is engraved with a positive image of the pattern.

The electrode may either be manufactured to be the same length as the metal roll or the only a fraction of its length. In the latter case the machining process is carried out in several stages to cover the complete length of the metal roll.

In the case of a large and consequently heavy metal roll, preferably the movement of the metal roll during the electric discharge machining process is restricted to rotation about its axis.

Preferably, a pulsed voltage, typically 80 V to 100 V, variable duty cycle electrical supply is applied between the metal roll and the electrode plate to induce electrical discharge. Preferably, an initial current is generated which is subsequently reduced to a lower value when the depth of penetration of the metal roll reaches 80% of a pre-determined ablation depth. This increases the speed of operation of the apparatus whilst ensuring a fine surface finish.

Electrode discharge machining (EDM) or spark erosion is well established for the manufacture of precision tools of intricate non-geometrical shapes, e.g. injection moulding cavities. Conventionally a negative master electrode is produced in high conductivity copper. This is positioned in close proximity to a workpiece to be machined which is held in a fixed position with only a few microns clearance between the two. The electrode and workpiece are immersed in a suitable dielectric such as oil, and a pulsed high voltage supply is applied between the electrode and the workpiece with the clearance between the two gradually reduced by moving the electrode along a plane towards the workpiece until the dielectric breaks down. The resulting spark removes a tiny grain of the workpiece. As the electrode is further advanced, more points reach a critical condition. The metal particles together with a microscopic amount of broken down solids of combusted dielectric form floating debris which is continually removed from the working gap by forced circulation of the dielectric fluid. The process is completed when the advance of the electrode reaches a required depth.

Commercially available EDM equipment has reached a very high degree of sophistication. In one integrated system, the HURCO (trade mark) system, a multi-axis electrode positioning servo is linked with a pulsed high voltage constant current generator thus optimising dynamically the gap between the electrode and the stationary workpiece, and, on sensing the presence of debris in the gap, interrupting the operation and temporarily opening the gap to allow the debris to clear. Ancillary equipment includes a temperature stabilising oil re-circulating and filtering system, motorised lowering and raising of the oil tank and fume extraction. The system is controlled by a computer and the main process variables are the mean current, pulse rate and mark/space ratio, which determine the rate of material removal, surface finish and electrode life. A practical set-up is always a compromise between these parameters.

According to a second aspect of the present invention, an electric discharge machining apparatus for manufacturing embossing rolls comprises a first drive means to rotate a metal roll about its axis, and a second drive means to move one of the metal roll or an electrode formed with a surface corresponding to a negative image of a patter to be engraved in the metal roll along at least one other axis,
wherein the second drive means is capable of moving the metal roll or electrode in any of three mutually orthogonal planes without slip occurring between the surface of the electrode and the metal roll.

The present invention provides a fast, efficient, safe and accurate method of manufacturing embossing rolls.

Examples of the present invention resulting from experimental work will now be described in more detail, with reference to the accompanying drawings, in which:-
Figure 1 is a first example of an apparatus in accordance with the present invention;
Figures 2 and 3 are a second example of an apparatus in accordance with the present invention;
Figures 4A to 4E are a series of sections illustrating an example of a method of forming a copper electrode plate;
Figure 5 is an operation sequence diagram of an example of an engraving operation sequence using the apparatus of Figures 2 and 3;
Figure 6 illustrates an example of an engraving technique; and,
Figure 7 illustrates several examples of repetition patterns.

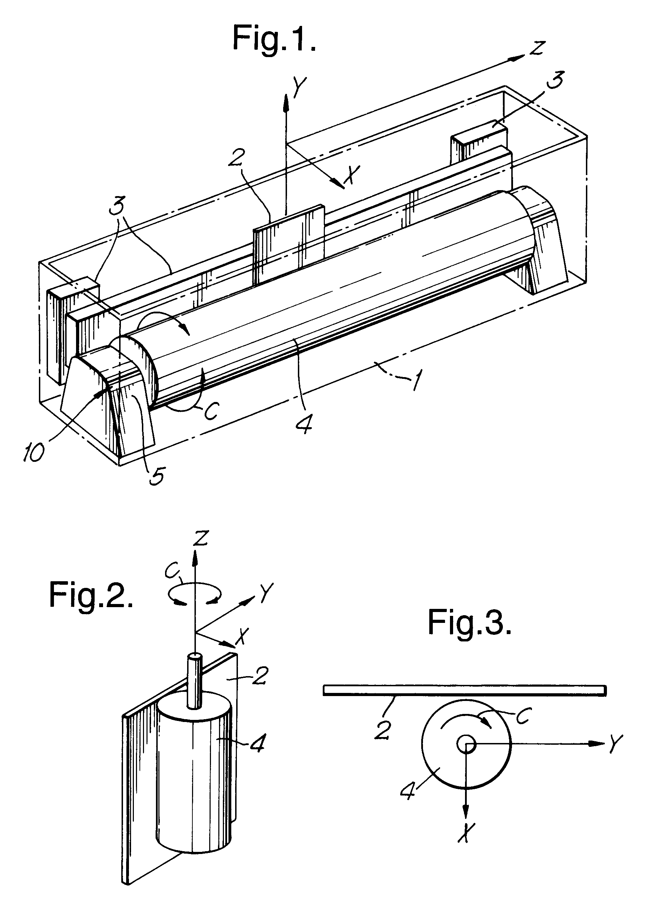

A first example of an EDM engraving apparatus in accordance with the present invention is shown in Figure 1. The apparatus comprises a tank 1 filled with a suitable dielectric such as oil, a copper electrode plate 2 mounted on a three axis servo drive 3 and a hardened steel roll 4 rotatably mounted on a servo drive 5.

In this example, the steel roll 4 may only be rotated around an axis in the direction C as indicated. The copper electrode 2 may be driven along any of the three axes X, Y and Z as indicated. This system is generally suitable for engraving large and consequently heavy metal rolls.

Figures 2 and 3 illustrate a second example of an EDM engraving apparatus in accordance with the present invention which utilises a co-ordinate system in which the copper electrode 2 is held stationary and a hardened metal roll 4 is moved along any of the axes X, Y or Z whilst rotating in a direction C about the Z axis without slip occurring between the surfaces of the electrode and the metal roll. This system is generally only suitable for engraving small metal rolls which are lighter and consequently easier to support and drive. In this example the electrode plate is the same length as the metal roll.

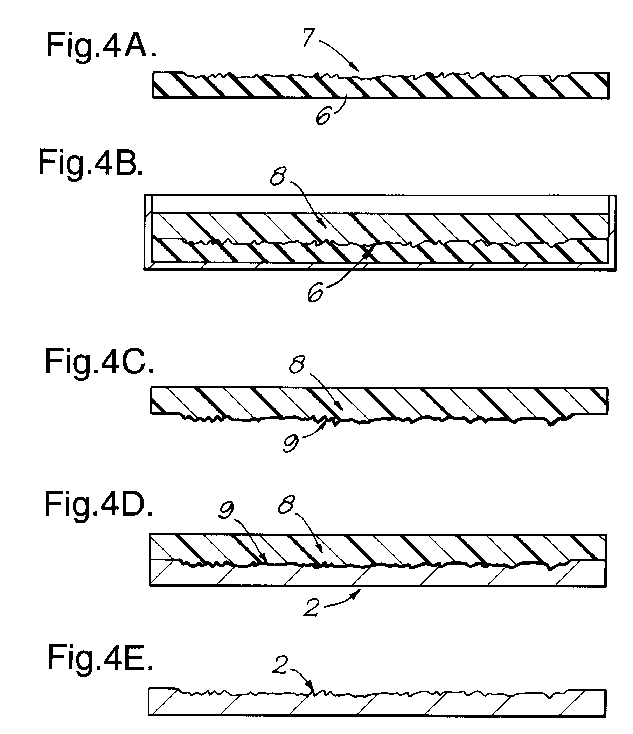

A method of forming the copper electrode 2 is shown in Figures 4A to 4E. A master engraving 7 is formed by engraving a three dimensional simple step and repeat sequence pattern on a curved rubber sheet 6 using a CO₂ laser engraver (see Figure 4A). This pattern is the negative image of the pattern which is to be engraved in the metal roll 4. The copper electrode 2 is produced by pouring epoxy resin on the rubber master engraving 7 to form an epoxy resin cast 8 (see Figure 4B). The rubber master engraving 7 must be held flat during this step to produce an accurate finish.

The epoxy resin cast 8 is coated with a sensitising deposit 9 (see Figure 4C) before high conductivity oxide free copper is electroplated onto the cast using conventional electroplating techniques to form the copper electrode (see Figure 4D). The surface of the electrode 2 is a replica of the original rubber master engraving 7 (see Figure 4E).

An alternative method is to electroplate copper directly onto a three dimensional master engraving made of rubber or any other suitable material which is pre-treated with a sensitising material. This produces a reverse image of the original engraving pattern on the surface of the copper electrode 2 so in this case the original laser engraved pattern must be a positive image of the pattern which is to be engraved in the metal roll.

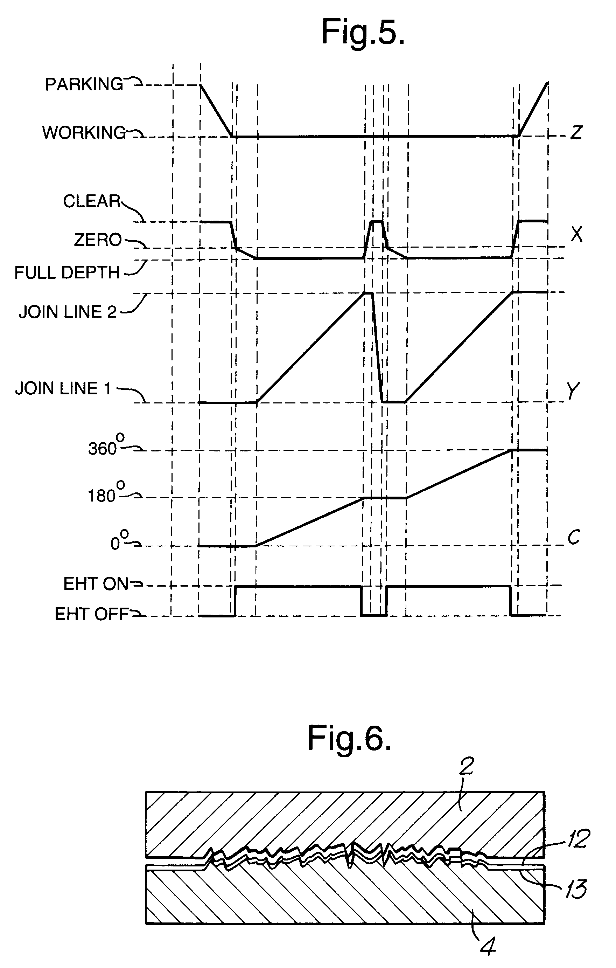

Figure 5 shows the operation sequence for engraving a simple step and repeat pattern comprising two differential units and one axial unit, using the apparatus and servo co-ordinate system shown in Figures 2 and 3. This operation produces a seamless metal roll.

A hardened steel or other roll 4 with a diameter of 50 mm and length 130 mm is positioned in a chuck controlled by a four axis servo system. The steel roll may be rough turned as EDM removes surface asperities as long as they are not greater than the required ablation depth i.e. the steel roll does not need to be finely polished before being subjected to electric discharge machining. The steel roll 4 is lowered along axis Z into an oil bath 1 to a pre-determined working height to face the stationary copper electrode plate 2.

The gap between the electrode 2 and the steel roll 4 is adjusted by moving the steel roll towards the electrode along the X axis.

Once the gap is set, electric discharge machining is started by applying a pulsed EHT source which supplies a constant current of 6 Amps with a 90% duty cycle. The current value determines the electrode life. A value of 6 Amps ensures a relatively long life.

The gap is reduced further by movement of the steel roll along the X axis until electric discharge occurs. The steel roll 4 then begins to rotate slowly about the Z axis in the direction C as the gap is steadily reduced until full ablation depth of, for example, 750 to 800 microns is achieved. The apparatus is programmed so that the steel roll travels past the complete length of the electrode plate during 180° of rotation so that no slip occurs between the surfaces of the electrode and the metal roll. Once this is completed, movement along the Y axis and about the Z axis is then halted, and the separation gap is increased by movement along the X axis to produce a safe clearance between the steel roll and the electrode.

The steel roll is then driven back along the Y axis to the start position and the sequence is repeated on the unmachined half of the steel roll. Finally, the steel roll is returned to a parking position.

There is an inverse relationship between the discharge current and surface finish. A lower current reduces the rate of ablation but increases the fidelity of the reproduction of the master surface. There are also practical current limitations set by excessive electrode wear and distortion caused by differential thermal expansion of the electrode. In this example a current greater than 6 Amps tends to result in a poor surface finish. To speed up the operation an initial current of 20 Amps may be supplied until penetration reaches 80% of the final ablation depth and subsequently the current is reduced to 6 Amps to complete the operation. The effects of this method are shown in Figure 6 in which the line 12 illustrates a "rough cut" finish and the line 13 illustrates the final "fine cut" finish. As shown, reduction in current during the final phase of the operation ensures a fine and accurate surface finish to match that of the master engraved image.

The operation of the apparatus shown in Figure 1 is similar in principle to that described above except that in this example the metal roll 4 is large and consequently heavy. The movement of the metal roll is therefore restricted to rotation about a single axis in the direction C. The electrode plate 2 is very much smaller than the metal roll and is mounted on a three axis servo drive 3.

In use, the electrode plate 2 is lowered along the Y axis to a working height and moved along the X axis into close proximity with the surface at one end of the metal roll. Once the electrode is in position, it is driven further towards the metal roll along the X axis whilst an EHT source supplies the necessary current to start spark erosion. The electrode plate 2 is lowered/raised along the Y axis in synchronism with the slow rotation of the metal roll in the direction C so that no slip occurs between the surfaces of the electrode and metal roll. Hence an area of metal roll is engraved with a pattern formed on the electrode plate.

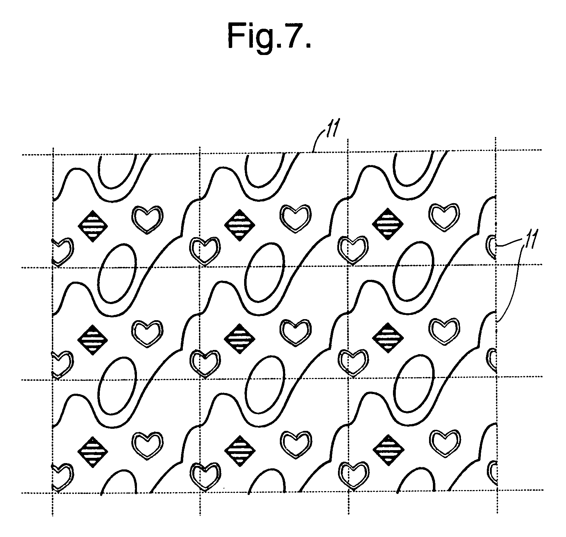

To cover the complete area of the roll, once a length of the roll equal to the width of the electrode has been machined, the electrode is withdrawn along the X axis and then driven a distance equal to its width along the Z axis and the machining process is repeated. In this example the original design must be repeatable, i.e. capable of seamless assembly by laying identical copies of the single design unit side by side axially and tangentially. An example of a repetition pattern 11 is shown in Figure 7.

## Claims

1. A method of engraving a pattern in a metal roll (4) comprising the steps of:
forming a surface on an electrode (2), the surface corresponding to a negative image of the pattern to be engraved;
supporting the metal roll (4) and the electrode (2) in a dielectric bath (1);
moving the metal roll (4) and the surface of the electrode (2) into close proximity; and,
applying a voltage between the electrode (2) and the metal roll (4) whilst rotating the metal roll (4) about its axis and driving one of the metal roll (4) or electrode (2) along at least one other axis without slip occurring between the surface of the electrode and the metal roll (4) to engrave the metal roll (4) by electric discharge machining.

2. A method according to claim 1, in which the dielectric bath (1) is filled with a dielectric oil.

3. A method according to claim 1 or 2, in which the electrode (2) is formed as a flat plate.

4. A method according to any one of the preceding claims, in which the electrode (2) is formed by first engraving an image of the pattern in a sheet of laser engravable material (8) using a CO₂ laser to form a master engraving, and then producing an image of the master engraving (7) by a technique including electroplating copper to provide a copper electrode (2) having a surface formed as an image of the master engraving (7).

5. A method according to claim 4, in which the metal electrode is produced by electroplating directly onto the engraved sheet (7), which is pre-treated with a sensitising material.

6. A method according to any one of the preceding claims, in which the electrode (2) is only a fraction of the length of the metal roll (4) and in which the machining process is carried out in several stages to cover the complete length of the metal roll (4).

7. A method according to any one of the preceding claims, in which the movement of the metal roll (4) during the electric discharge machining process is restricted to rotation about its axis.

8. A method according to any one of the preceding claims, in which an initial current is generated which is subsequently reduced to a lower value when the depth of penetration of the metal roll (4) reaches 80% of its pre-determined ablation depth.

9. An electric discharge machining apparatus for manufacturing embossing rolls comprising a first drive means (10) to rotate a metal roll (4) about its axis, and a second drive means (3) to move one of the metal roll (4) or an electrode (2) formed with a surface corresponding to a negative image of a pattern to be engraved in the metal roll (4) along at least one other axis,
wherein the second drive means (10) is capable of moving the metal roll (4) or electrode (2) in any of three mutually orthogonal planes without slip occurring between the surface of the electrode (2) and the metal roll (4).
